# EUROPÄISCHE PATENTSCHRIFT

(11) **EP 0 804 798 B1**
(45) Veröffentlichungstag und Bekanntmachung des Hinweises auf die Patenterteilung: **28.10.1998**
(21) Anmeldenummer: 96900264.1
(22) Anmeldetag: 10.01.1996
(51) Int. Cl.: H01F 36/00

(54) **MEHRPHASIGER TRANSFORMATOR**
MULTI-PHASE TRANSFORMER
TRANSFORMATEUR POLYPHASE

(30) Priorität: 16.01.1995 DE 19501082
(43) Veröffentlichungstag der Anmeldung: 05.11.1997
(73) Patentinhaber: SIEMENS AKTIENGESELLSCHAFT, 80333 München (DE)
(72) Erfinder: MÜLLER, Walter, D-82449 Uffing (DE)
(86) Internationale Anmeldenummer: DE9600023
(87) Internationale Veröffentlichungsnummer: WO9622607

(56) Entgegenhaltungen:
- EP-A- 0 422 556
- CH-A- 411 124
- DE-B- 1 204 322
- DE-C- 937 184
- US-A- 4 151 498

## Beschreibung

Die Erfindung betrifft einen mehrphasigen Transformator mit einer supraleitenden Toruswicklung.

Bei Transformatoren für hohe Leistungen ist zur Erzielung von geringen Gewichten und Verlusten der Einsatz von supraleitenden Materials für die Leiter der Wicklungen bekannt. Dabei werden bevorzugt eisenlose Anordnungen - also ohne Transformatorkern - verwendet. Um ein in die Umgebung des Transformators ausstrahlendes Magnetfeld aus Gründen der elektromagnetischen Verträglichkeit (EMV) zu vermeiden, wird möglichst eine Führung des Hauptfeldes in geschlossenen Flußschläuchen durch die Wicklung selbst erzwungen.

Eine bekannte Lösung hierzu ist die Toruswicklung, bei der eine günstige Führung des Hauptfeldes möglich ist. Die Toruswicklung wird dabei aus einem rohrartigen Material hergestellt. Eine derartige Toruswicklung erfordert eine aufwendige Fertigungstechnik. Die Toruswicklung ist zur Erzielung der Supraleitung in einem Kyrostatgefäß, insbesondere einem Tank, einem Kessel oder einem sonstigen geeigneten Gefäß, untergebracht, das das Kühlmedium enthält. Derartige supraleitende Transformatoren gibt es bisher in der Praxis lediglich als Versuchsmodelle in einphasiger Ausführung.

Aus der CH-PS 411 124 ist ein supraleitender Transformator bekannt, dessen Wicklungen torusförmig angeordnet sind, wobei der Querschnitt der Wicklungen kreisringförmige Gestalt aufweist. Aus der DE-OS 14 88 322 ist ein Transformator mit supraleitenden Wicklungen bekannt, bei denen auf einem gemeinsamen ringförmig geschlossenen Kern koaxial ineinander geschachtelte Wicklungen angeordnet sind. Zusätzlich ist eine Gleichstromwicklung vorgesehen, welche derart in Teilwicklungen unterteilt ist, daß sich die in ihnen aufgrund der Wechsel flüsse im magnetischen Kreis induzierten Spannungen gegenseitig aufheben.

Aus der DE-AS 12 04 322 ist ein Dreiphasen-Transformator bekannt, dessen Wicklungen nach bekannter Art und Weise auf einem fünfschenkligen Kern angeordnet sind. Der Kern ist aus drei Teilen aufgebaut. Jedem Kernteil ist jeweils ein getrennter Behälter zugeordnet, welcher jeweils mit einem Flansch versehen ist. Der Transformator ist zum Zwecke des Transports mit seinen Kern- und Behälterteilen zerlegbar.

Der Erfindung liegt die Aufgabe zugrunde, einen supraleitenden Transformator in mehrphasiger Ausführung anzugeben, der besonders einfach herstellbar und günstig handhabbar ist.

Die Lösung der Aufgabe gelingt mit einem supraleitenden mehrphasigen Transformator, der mit seiner Toruswicklung in einem Kessel mit einem Kühlmedium angeordnet ist, wobei die Toruswicklung entlang ihres Verlaufs für jede Phase in Wicklungsabschnitte unterteilt ist, wobei die magnetischen Flüsse der Wicklungsabschnitte durch zumindest ein Joch geschlossen sind, und wobei der Kessel an Trennstellen der Toruswicklung mit einem Joch in Kesselabschnitte unterteilt ist.

Auf diese Weise ist ein Transformator gegeben, der phasenweise baukastenartig zusammengesetzt ist. Er ist dadurch in kleinen Baueinheiten herstell- und transpotierbar, welche ein geringes Gewicht aufweisen. Jedem Kesselabschnitt kann dabei auch ein eigener Kühlkreislauf zugeordnet sein, wodurch die Betriebssicherheit gegenüber dem Stand der Technik verbessert ist.

Bevorzugt sind die Joche zwischen die Kesselabschnitte angeordnet. Dadurch ist die Montage des Transformators vereinfacht. Außerdem können die Joche dann bei einer anderen Temperatur als innerhalb des Kessels, z.B. bei Raumtemperatur, betrieben werden.

Die Kesselabschnitte können mit Flanschen miteinender verbunden sein. Diese sind dann bevorzugt im Bereich der Joche angeordnet, wodurch einen einfache platzsparende Montage möglich ist.

Es ist günstig, wenn für zumindest zwei Wicklungsabschnitte, insbesondere für alle, ein gemeinsames Joch vorgesehen ist. Dadurch ist eine Einsparung von Material und Gewicht bei kleinen Baumaßen möglich.

Es ist von Vorteil, wenn die Toruswicklung gestreckt ist und in ihrer Streckrichtung durch Querunterteilung in die Wicklungsabschnitte unterteilt ist, wodurch gegebenenfalls zumindest eine Phase zwei Wicklungsabschnitte aufweist, die durch zwei Joche miteinander verbunden sind. Dadurch kann der Kessel und seine Abschnitte in der Form sehr einfach, insbesondere quaderförmig, ausgestaltet werden. Es ergibt sich daurch auch eine einfache Herstellung, Transportierbarkeit und Lagerfähigkeit.

Zur Erzeugung einer besonders platzsparenden Ausführung kann die gestreckte Toruswicklung auch zusätzlich gefaltet sein. Der Kessel ist auf diese Weise sehr kompakt. Dies kann sich auch günstig bei einer Optimierung des erforderlichen Kesselvolumens für den Transformator auswirken. Durch das Falten sind kleinste Transformatorgrößen bei gleichbleibenden elektrischen Werten erzielbar.

Der Transformator ist bevorzugt dreiphasig ausgeführt. Er eignet sich daher besonders für den Einsatz in vorhandenen Energieverteilungsnetzten.

Die Erfindung, weitere Vorteile und Details werden nachfolgend in Ausführungsbeispielen anhand der Zeichnung beispielhaft näher erläutert. Es zeigen:
- FIG 1: ein supraleitender Transformator mit Toruswicklung,
- FIG 2: ein erstes Wicklungselement für eine Toruswicklung gemäß FIG 1,
- FIG 3: eine Toruswicklung in gestreckter Bauweise,
- FIG 4: ein Transformator mit einer gestreckten Toruswicklung in gefalteter Ausführung in einer Seitenansicht,
- FIG 5: der Transformator gemäß FIG 4 in der Draufsicht,
- FIG 6 und 7: ein Prinzipbild eines dreiphasigen Transformators mit einer gestreckten Toruswicklung in einer Drauf-bzw. Seitenansicht und
- FIG 8 und 9: ein dreiphasigen Transformator mit einer gefalteten Toruswicklung in einer Drauf- bzw. Seitenansicht.

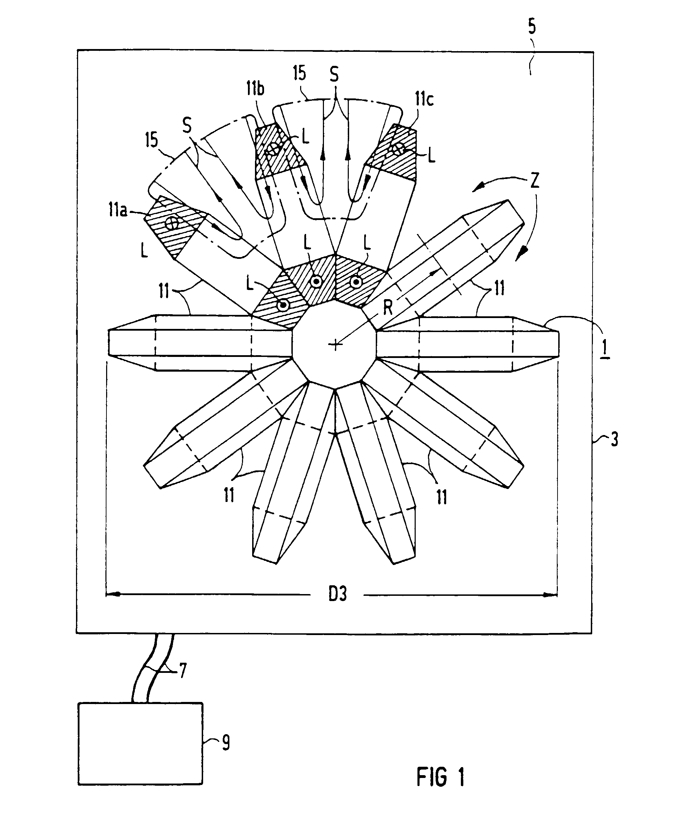

FIG 1 zeigt einen supraleitenden Transformator 1, der in einem als Kyrostatgefäß dienenden Gehäuse 3 angeordnet ist. Die Prinzipdarstellung zeigt, daß der Innenraum 5 des Gehäuses 3 über Versorgungsleitungen 7 mit einer Kühleinrichtung 9 verbunden ist. Die Kühleinrichtung 9 kühlt das im Gehäuse 3 enthaltene Kühlmedium auf die erforderliche Tieftemperatur herab.

Der Transformator 1 weist im Prinzip eine Wicklung auf, die nach Art einer Toruswicklung, ähnlich einem geschlossenen Schlauchring, aufgebaut ist. Die Toruswicklung wird vorliegend von einer Vielzahl von ersten Wicklungselementen 11, 11a, 11b, 11c gebildet, die sektorartig aneinander gefügt sind. Sie bilden dabei eine polygonartige Anordnung.

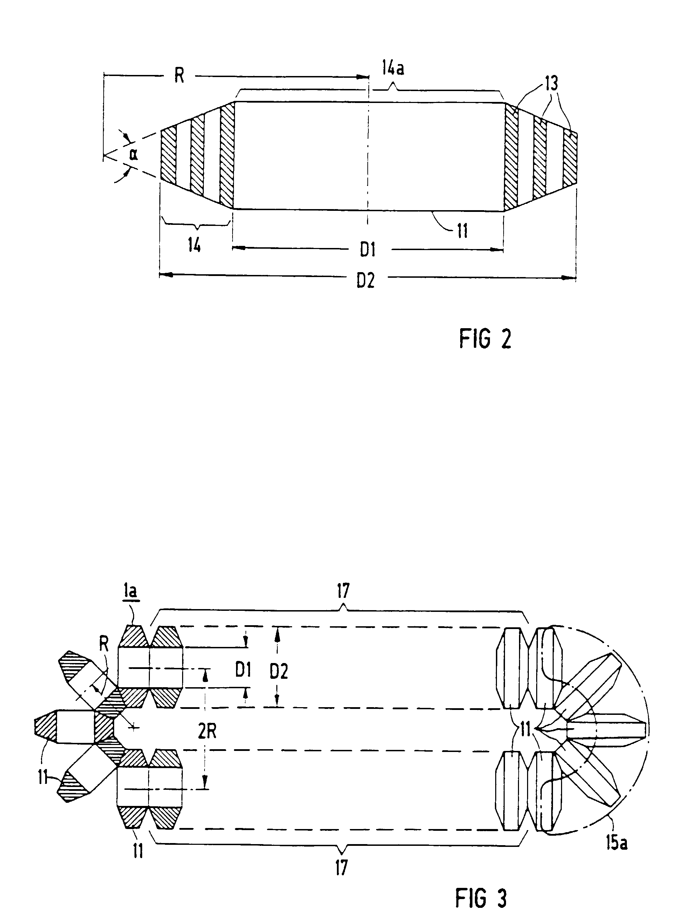

FIG 2 zeigt einen Schnitt durch ein derartiges erstes Wicklungselement 11 im Detail. Das erste Wicklungselement 11 ist zunächst ringartig mit einem inneren Durchmesser D1 und einem äußeren Durchmesser D2 aufgebaut. Je nach gewünschtem Transformatortyp sind in dem ersten Wicklungselement 11 entsprechende konzentrische Röhrenleiter 13 koaxial angeordnet, die als Leiter für die Wicklung dienen. Vorliegend ist beispielhaft das Wicklungselement 11 mit drei Röhrenleitern 13 dargestellt, die für einen Dreiwicklungstransformator oder auch eine doppelkonzentrische Anordnung eines Zweiwicklungstransformators dienen kann.

Da vorliegend ein supraleitendes Bauelement gebildet sein soll, sind die Röhrenleiter selbstverständlich aus einem supraleitenden Material, z.B. einem Hoch- oder Tieftemperaturleiter (HTL bzw. TTL), gefertigt.

Zumindest im Bereich 14 der einander anliegenden Flächen benachbarter Wicklungselemente weist das Wicklungselement 11 ein Profil mit einem keil- oder trapezförmigen Querschnitt auf. Im Gegensatz zu einem O-Ring mit kreisförmigem Querschnitt kann hier also von einem Trapez-Ring gesprochen werden.

Der entsprechende Trapezwinkel α hängt je nach der für die Toruswicklung vorgesehenen Geometrie, insbesondere dem Radius und der Anzahl von Wicklungselementen 11, ab. Bevorzugt ist das Wicklungselement 11 - wie dargestellt - rotationssymmetrisch ausgebildet, so daß beim Zusammenfügen von Wicklungselementen 11a, 11b, 11c keine besondere Lage vorgesehen werden muß. Es sind jedoch auch unsymmetrische Formen oder im Gegensatz zur Kreisringform auch eckige oder ovale Ausführungen möglich, die jedoch nicht weiter dargestellt sind.

In FIG 1 ist zu sehen, wie eine vorgegebene Anzahl, nämlich zehn, Wicklungselemente 11 bis 11c polygonartig zur einer Toruswicklung zusammengefügt sind. Um die Zwischenräume Z zwischen den Wicklungselementen 11 bis 11c möglichst klein zu halten, kann die Anzahl der ersten Wicklungselemente 11 bis 11c hoch gewählt werden. Auf diese Weise ist ein radiales Ausweichen des magnetischen Flusses zwischen den ersten Wicklungselementen 11 bis 11c vermieden. Es ist auch alternativ prinzipiell möglich, die ersten Wicklungselemente im Querschnitt völlig kreisringsektorförmig auszubilden, so daß die Zwischenräume Z nahezu völlig vermieden sind.

Zur Vermeidung des radialen Austretens des elektromagnetischen Flusses aus der Toruswicklung sind beispielhaft an den ersten Wicklungselementen lla,llb,llc Schirmkörper 15 angeordnet (strichliert dargestellt). Die Schirmkörper 15 sind etwa sattelförmig ausgebildet und überlappen jeweils einen Zwischenraum Z zwischen zwei Wicklungselementen 11a und 11b bzw. 11b und 11c. Mit S sind die Verläufe der resultierenden Wirbelstrombahnen in den Schirmkörpern 15 bezüglich der eingezeichneten Leerlaufstromdurchflutung L in den ersten Wicklungselementen lla bis llc qualitativ dargestellt.

Die Schirmkörper 15 sind ebenfalls aus einem supraleitenden elektromagnetischen Material gefertigt. Sie können auch durch eine flächenhafte Belegung eines entsprechend geformten Trägermaterials mit supraleitenden Material realisiert werden.

Alternativ kann das Trägermaterial auch von linienhaften Supraleitern gebildet werden. Es ergibt sich dadurch ein skelettartiger Träger. Gegebenenfalls können die Schirmkörper 15 selbst in einer derartigen Skelettbauweise ausgeführt sein. Die einzelnen Leiter oder Drähte des Skeletts sind dann elektrisch miteinander verbunden.

Die ersten Wicklungselemente 11a bis 11c und die Schirme 15 können miteinander durch nicht näher dargestellte Befestigungsmittel, . B. Halteelemente aus Kunststoff, miteinander befestigt oder auch auf einfache Weise miteinander verklebt sein.

Um bei größeren Leistungen, z. B. bei Leistungstransformatoren mit über 10 MVA Einphasenleistung, einen großen Polygondurchmesser D3 zu vermeiden, kann eine Ausführung eines Transformators la gemäß FIG 3 mit gestreckter Toruswicklung günstig sein (Darstellung ohne Gehäuse). Es kann dabei nämlich ein kleinerer Radius R gegenüber dem aus FIG 1 verwendet werden, wobei zwei Halbpolygone mit zwei geraden Abschnitten 17 miteinander verbunden sind. Die geraden Abschnitte 17 können selbstverständlich von einfachen konzentrisch angeordneten geraden Röhrenstücken gebildet sein (nicht näher dargestellt). Die geraden Abschnitte können jedoch auch unter Verwendung der neuen ersten Wicklungselemente 11 gebildet werden. Diese können nämlich im Bereich ihres inneren Durchmessers D1 - wie in FIG 2 zu sehen ist - unter Bildung einer geraden Flußröhre gerade aneinander gesetzt werden. Auf diese Weise ist die gesamte Wicklungsanordnung von einem standardmäßigen ersten Wicklungselement 11 gebildet. Der Schirmkörper 15a kann auch mehrere Wicklungselemente 11 abdecken, so daß wie hier gezeigt ein halbschalenartiger Schirm 15a gebildet ist.

Dadurch, daß die ersten Wicklungselemente 11 gerade und in Winkeln zueinander angeordnet werden können, sind beliebige Bauformen für die Wicklung eines Transformators oder einer Spule erzeugbar. Dies ist besonders günstig wenn bestimmte Baugrößen oder Bauformen eingehalten werden müssen.

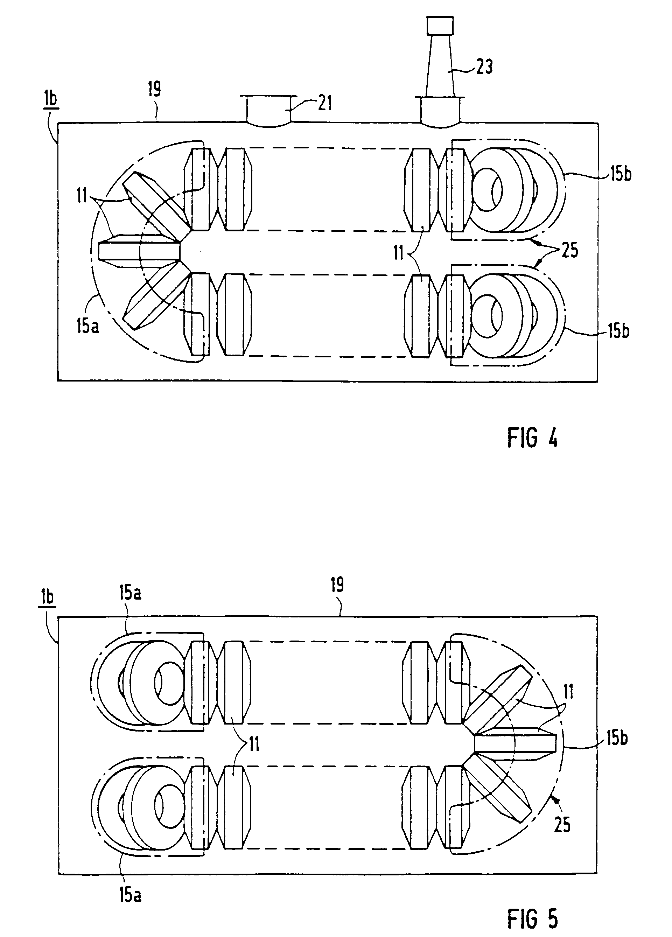

Die FIG 4 und 5 zeigen eine weitere Ausführungsform eines supraleitenden Transformators 1b, bei dem die gestreckte Wicklungsanordnung gemäß FIG 3 zusätzlich gefaltet ist. Die beiden Figuren zeigen den Kessel 19 des Transformators 1b, der beispielhaft einen Kühlanlagenanschluß 21 und eine Hochspannungsdurchführung 23 aufweist. Diese Ausführung weist gegenüber der aus FIG 3 eine reduzierte Baulänge auf, die ohne zusätzliche Bauelemente erzielbar ist. Die Wicklungsanordnung mit den neuen Wicklungselementen 11 ist nämlich nach Art einer Gliederkette verformbar. An den zusätzlichen Knickstellen 25 sind ebenfalls bevorzugt Schirmkörper 15b zur Flußsteuerung vorgesehen.

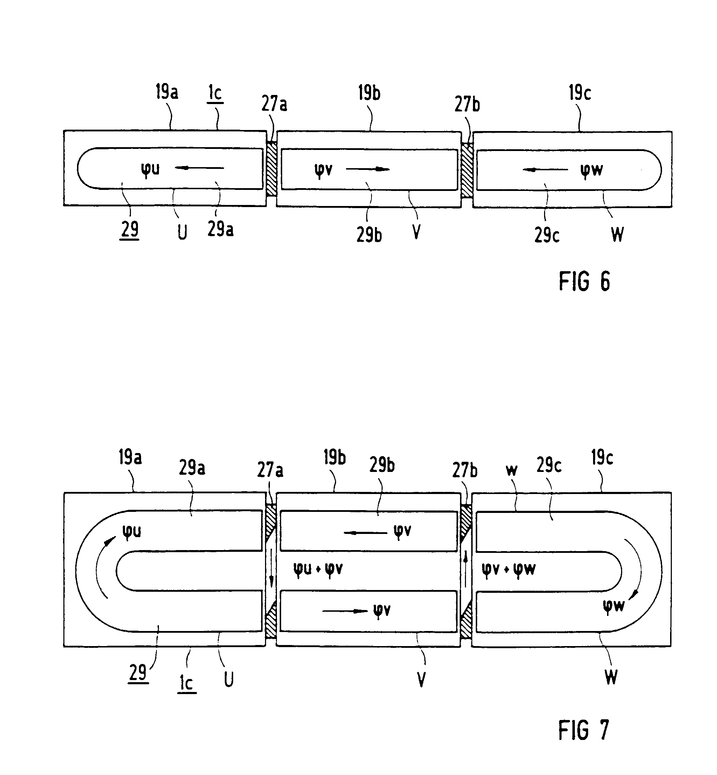

Die FIG 6, 7 und 8, 9 zeigen mehrphasige supraleitende Transformatoren 1c bzw. 1d in einer Seiten- und Draufsicht. Die Wicklung 29 ist dabei nur im Prinzip dargestellt. Es ist dabei zu erkennen, daß für alle Phasen U,V,W - hier vorliegend drei - nur eine gemeinsame Toruswicklung 29 vorgesehen ist. Sie ist in einzelne Wicklungsabschnitte 29a bis 29c für die einzelnen Phasen U,V,W unterteilt. Die Wicklungsabschnitte 29a bis 29c der Phasen U,V,W sind durch Joche 27a,27b (Figuren 6 und 7) voneinander getrennt. Die gezeigte gestreckte Toruswicklung 29 des Transformators 1c ist in diesem Ausführungsbeispiel in ihrer Streckrichtung quer unterteilt, so daß nur zwei Joche 27a,b nötig sind. Die Phase V teilt sich demnach in zwei voneinander getrennte Wicklungsabschnitte 29b auf.

Die sich ergebenden magnetischen Flüße ϕu,ϕv,ϕw sind in den Figuren eingezeichnet. Die Flußrichtung der mittleren Phase V ist den positiven Flußrichtungen der Phasen U und W entgegengesetzt gewählt, so daß durch vektorielle Addition an den Jochen 27a,27b kleinstmögliche Flüße ϕu,ϕv,ϕw entstehen.

Die Unterteilung in die Wicklungsabschnitte 29a,29b,29c dient gleichzeitig zur Aufteilung des Kessels in drei Kesselabschnitte 19a,19b,19c. Die Kesselabschnitte 19a,19b,19c sind an ihren aneinanderliegenden Flächen im Bereich der Joche 27a,27b mit nicht näher gezeigten Flanschen ( nach dem Stand der Technik) versehen, so daß einen gute mechanische und magnetische Kopplung der geweilig gebildeten Einheiten möglich ist. Ein derartiger Transformator 1c ist dadurch mehrteilig transportierbar, was insbesondere bei großen Transformatoren von Vorteil ist, da dort immer wieder Transportgröße und - gewicht ein Problem darstellen. Gegebenenfalls können die Joche 27a,27b und die Flansche vorteilhaft zu einer baulichen Einheit vereinigt sein. Die Joche 27a,27b sind aus üblichen Transformatorblech gefertigt und außerhalb zwischen den Kesselabschnitten 19a,19b,19c angeordnet, so daß sie bei normalen Umgebungstemparaturen, also etwa zwischen 0 und 100° C, betrieben werden.

Die Kesselabschnitte 19a,19b,19c konnen bei der vorliegenden einfachen Aufteilung der Toruswicklung 29 als Quader ausgeführt sein, wodurch sie einfach herstellbar sind. Es ist auch eine sternförmige Unterteilung des gesamten Transformators denkbar, bei der ein je nach Anzahl der Phasen sternförmig aufgeteilter zylindrischer Kessel zur Anwendung kommt.

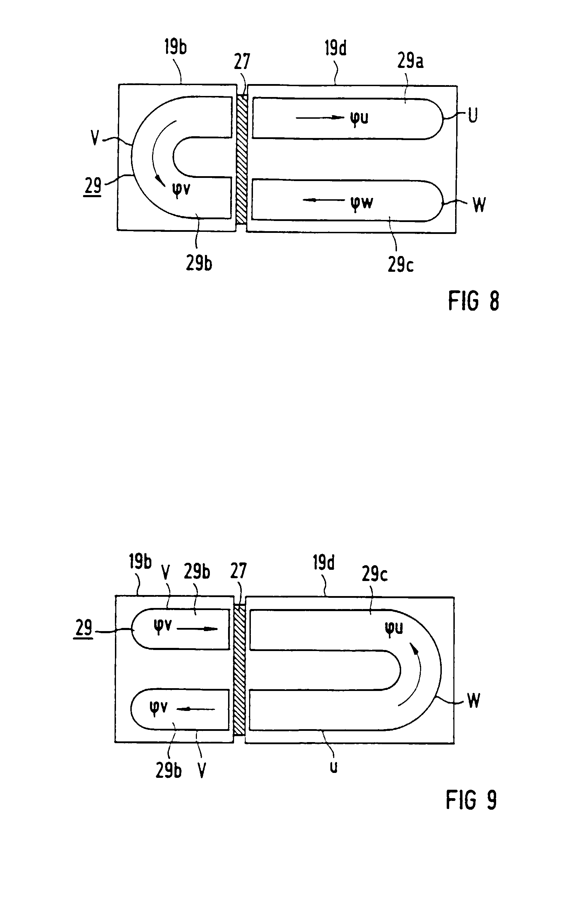

Auch diese beispielhaft dreiphasige Anordnung ist gemäß den obigen Ausführungen auch in gefalteter Ausführung herstellbar. In der gefalteten Ausführung gemäß FIG 9 kommen dabei die Wicklungsabschnitte 29a und 29c der Phasen U und W nebeneinander zu liegen. Diese können dann mit Vorteil auch in einem gemeinsamen Kesselabschnitt 19d untergebracht sein.Die Kessel form kann hier beliebig zylindrisch oder auch quaderförmig sein. Bei dieser Ausführung ist sogar nur ein gemeinsames Joch 27 erforderlich.

Selbstverständlich sind die Merkmale der einzelnen Ausführungen miteinander kombinierbar oder untereinander austauschbar, ohne daß der Grundgedanke der Erfindung verlassen wird.

## Patentansprüche

1. Mehrphasiger Transformator (1c,1d), der mit seiner supraleitenden Toruswicklung in einem Kessel mit einem Kühlmedium angeordnet ist,
wobei die Toruswicklung (29) entlang ihres Verlaufs für jede Phase (U,V,W) in Wicklungsbschnitte (29a bis 29c) unterteilt ist,
wobei die magnetischen Flüsse (ϕu,ϕv,ϕw) der Wicklungsabschnitte (29a bis 29c) durch zumindest ein Joch (27,27a) geschlossen sind,
wobei der Kessel im Bereich des/der Joch/es (27,27a) in Kesselabschnitte (19a,19b,19c) unterteilt ist, und
wobei jeweils ein Wicklungsabschnitt(29a bis 29c) in einem jeweils zugeordneten Kesselabschnitt (19a,19b,19c) angeordnet ist.

2. Mehrphasiger Transformator nach Anspruch 1, wobei das/die Joche (27, 27a) zwischen den Kesselabschnitten (19a bis 19d) angeordnet ist/sind.

3. Mehrphasiger Transformator nach Anspruch 1 oder 2, wobei die Kesselabschnitte (19a bis 19d) mit Flanschen miteinander verbunden sind.

4. Mehrphasiger Transformator nach Anspruch 1, 2 oder 3, wobei für zumindest zwei Wicklungsabschnitte (29a bis 29c), insbesondere für alle, ein gemeinsames Joch (27,27a) vorgesehen ist.

5. Mehrphasiger Transformator nach einem der Ansprüche 1 bis 4, wobei die Toruswicklung (29) gestreckt ist und in ihrer Streckrichtung durch Querunterteilung in die Wicklungsabschnitte (29a bis 29c) unterteilt ist, wodurch gegebenenfalls zumindest eine Phase (U,V,W) zwei Wicklungsabschnitte (29b) aufweist, die durch zwei Joche (27) miteinander verbunden sind.

6. Mehrphasiger Transformator nach Anspruch 5, wobei die gestreckte Toruswicklung (29) im Bereich ihrer Streckung gefaltet ist, derart, daß ihre freien Enden parallel zueinander liegen.

7. Mehrphasiger Transformator nach einem der Ansprüche 1 bis 5, welcher dreiphasig ausgeführt ist.

8. Mehrphasiger Transformator nach einem der Ansprüche 1 bis 7, wobei der Kessel für Transportzwecke entsprechend seiner Kesselabschnitte (29a bis 29c) zerlegbar ist.

## Claims

1. Multi-phase transformer (1c,1d), which is arranged with its superconductive toroidal winding in a tank with a cooling medium,
the toroidal winding (29) being divided along its course for each phase (U, V, W) into winding sections (29a to 29c),
the magnetic fluxes (ϕu,ϕv,ϕw) in the winding sections (29a to 29c) being closed by at least one yoke (27,27a),
the tank being divided in the region of the yoke or yokes (27,27a) into tank sections (19a,19b,19c), and
one winding section (29a to 29c) in each case being arranged in a respectively associated tank section (19a,19b,19c).

2. Multi-phase transformer according to Claim 1, the yoke or yokes (27, 27a) being arranged between the tank sections (19a to 19d).

3. Multi-phase transformer according to Claim 1 or 2, the tank sections (19a to 19d) being connected to one another by means of flanges.

4. Multi-phase transformer according to Claim 1, 2 or 3, a common yoke (27, 27a) being provided for at least two winding sections (29a to 29c), in particular for all of them.

5. Multi-phase transformer according to one of Claims 1 to 4, the toroidal winding (29) being extended and being divided in its extended direction by transverse division into the winding sections (29a to 29c), as a result of which at least one phase (U, V, W), if appropriate, has two winding sections (29b) which are connected to one another by two yokes (27).

6. Multi-phase transformer according to Claim 5, the extended toroidal winding (29) being folded in the region of its extension in such a manner that its free ends are parallel to one another.

7. Multi-phase transformer according to one of Claims 1 to 5, which is designed to have three phases.

8. Multi-phase transformer according to one of Claims 1 to 7, it being possible to disassemble the tank in accordance with its tank sections (29a to 29c), for transportation purposes.

## Revendications

1. Transformateur polyphasé (1c, 1d), qui est placé avec son enroulement torique supraconducteur dans une cuve contenant un produit de refroidissement, dans lequel
l'enroulement torique (29) est divisé en tronçons d'enroulement (29a à 29c) pour chaque phase (U, V, W),
les flux magnétiques (ϕu, ϕv, ϕw) des tronçons d'enroulement (29a à 29c) sont fermés par au moins une culasse (27, 27a),
la cuve est divisée dans la zone de la ou des culasses (27, 27a) en tronçons de cuve (19a, 19b, 19c), et
chaque tronçon d'enroulement (29a à 29c) est placé dans un tronçon de cuve (19a, 19b, 19c) respectivement associé.

2. Transformateur polyphasé selon la revendication 1, dans lequel la ou les culasses (27, 27a) sont disposées entre les tronçons de cuve (19a à 19d).

3. Transformateur polyphasé selon la revendication 1 ou 2, dans lequel les tronçons de cuve (19a à 19d) sont assemblés par des brides.

4. Transformateur polyphasé selon la revendication 1, 2 ou 3, dans lequel il est prévu pour au moins deux tronçons d'enroulement (29a à 29c), notamment pour tous, une culasse commune (27, 27a).

5. Transformateur polyphasé selon l'une des revendications 1 à 4, dans lequel l'enroulement torique (29) est allongé et est divisé dans son sens d'allongement par une division transversale en tronçons d'enroulement (29a à 29c), au moins une phase (U, V, W) comportant alors éventuellement deux tronçons d'enroulement (29b) qui sont reliés par deux culasses (27).

6. Transformateur polyphasé selon la revendication 5, dans lequel l'enroulement torique (29) allongé est plié dans la zone de son allongement de telle sorte que ses extrémités libres se trouvent parallèles l'une à l'autre.

7. Transformateur polyphasé selon l'une des revendications 1 à 5, qui est conçu triphasé.

8. Transformateur polyphasé selon l'une des revendications 1 à 7, dans lequel la cuve peut être démontée suivant ses tronçons de cuve (29a à 29c) pour être transportée.
